# EUROPEAN PATENT APPLICATION

(11) **EP 3 726 405 A1**
(43) Date of publication of application: **21.10.2020**
(21) Application number: 18889844.9
(22) Date of filing: 10.12.2018
(51) Int. Cl.: G06F 21/31, G07C 9/00

(54) **VEHICLE AUTHORIZATION MANAGEMENT METHOD AND SYSTEM**

(30) Priority: 15.12.2017 CN 201711352658
(71) Applicant: Nio Nextev Limited, Hong Kong (CN)
(72) Inventor: LUO, Xi, Shanghai 201804 (CN); SHEN, Fangzhu, Shanghai 201804 (CN)
(74) Representative: Patentwerk B.V.
(86) International application number: PCT/CN2018/120095
(87) International publication number: WO 2019/114659

(57) **Abstract**

The invention belongs to the technical field of electronic communication of vehicles, and in particular to a vehicle authorisation management method and system. In order to better meet different use requirements for vehicles, the vehicle authorisation management method provided in the invention comprises the steps of: receiving request information of a vehicle; and executing a corresponding authorisation mode according to the request information, wherein the authorisation modes comprise a service authorisation mode and an active authorisation mode. The authorisation management method further comprises: monitoring, in real time, a use record of the vehicle during an authorisation period; and storing the use record. In the invention, by means of a service authorisation mode or an active authorisation mode, a use right of a vehicle can be flexibly and conveniently assigned and managed, and there is no need to transfer the use right of the vehicle by handing over a key, thereby improving vehicle use experience of a vehicle owner. Furthermore, a use record of the vehicle during an authorisation period may also be stored, so that the vehicle owner can view a travelling mileage of the vehicle during the authorisation period, thereby effectively managing the authorised use behaviour of the vehicle owner's vehicle.

## Description

### Technical Field

The invention relates to the technical field of electronic communication of vehicles, and in particular to a vehicle authorisation management method and system.

### Background Art

In the present society, vehicles have become a main means of transportation for daily travelling of people. There are increasingly more ways to use vehicles, for example, a vehicle owner may lend the vehicle to others for using or share the vehicle with multiple persons for using. When the vehicle owner lends the vehicle to others for using, a vehicle key usually needs to be handed over to a vehicle borrower, but if the vehicle owner is far away from the vehicle borrower, handover of the vehicle key becomes very inconvenient. Some vehicles are provided with intelligent vehicle keys, for example, a vehicle owner may unlock and start the vehicle through a corresponding account number and password, but because the account number, the password and the like often relate to privacy of the vehicle owner, it is inconvenient to lend the account number, the password and the like to others. An existing vehicle lending process has brought great inconvenience to the vehicle owner and other users. In addition, after the vehicle is lent to others, it is impossible for the vehicle owner to effectively manage and control vehicle use situations (such as a vehicle borrowing time, a drive range, and a specific vehicle control permission) of the borrower, thereby increasing a vehicle lending risk of the vehicle owner. In particular, with the gradually increased number of vehicle users, various services requirements, such as valet maintenance, valet battery charging and swap, and express delivery to the vehicle, for the vehicle also continuously increase. According to different service types, service persons have different operation requirements for the vehicles, and hence, how to manage operation permissions of different service persons becomes a technical problem to be urgently solved by those skilled in the art.

Based on this, the invention is proposed.

### Summary of the Invention

In order to solve the above-mentioned problem in the prior art, that is, to better meet different use requirements for vehicles, the invention provides a vehicle authorisation management method, which comprises the steps of: receiving request information of a vehicle; and executing a corresponding authorisation mode according to the request information, wherein the authorisation modes comprise a service authorisation mode and an active authorisation mode.

In a preferred implementation of the above-mentioned vehicle authorisation management method, the step of "executing a corresponding authorisation mode according to the request information" specifically comprises: executing the service authorisation mode if the request information is a service request; and executing the active authorisation mode if the request information is an authorisation request.

In a preferred implementation of the above-mentioned vehicle authorisation management method, the service authorisation mode comprises: matching a service person for the vehicle according to the service request; and assigning an operation permission on the vehicle to the service person.

In a preferred implementation of the above-mentioned vehicle authorisation management method, the service request comprises one or more of valet maintenance, valet battery charging and swap, and express delivery to the vehicle.

In a preferred implementation of the above-mentioned vehicle authorisation management method, the operation permission on the vehicle comprises one or more of unlocking/locking a vehicle door and a trunk, starting the vehicle, starting a battery charging and swap mode, controlling and setting vehicle auxiliary functions, setting in-vehicle applications, performing remote control, and setting a system.

In a preferred implementation of the above-mentioned vehicle authorisation management method, the operation permission on the vehicle further comprises an authorised time, and only within the authorised time, the service person can perform operations within the permission on the vehicle.

In a preferred implementation of the above-mentioned vehicle authorisation management method, the active authorisation mode comprises: generating an NFC key according to the authorisation request; and sending the NFC key to a target terminal, wherein the NFC key is configured to unlock an operation permission on the vehicle that is corresponding to the authorisation request.

In a preferred implementation of the above-mentioned vehicle authorisation management method, the authorisation request comprises one or more of identify identification of an authorised person, a travelling range and an authorised use time of the vehicle, and usable functions of the vehicle.

In a preferred implementation of the above-mentioned vehicle authorisation management method, the vehicle authorisation management method further comprises: monitoring, in real time, a use record of the vehicle during an authorisation period; and storing the use record.

In a preferred implementation of the above-mentioned vehicle authorisation management method, after the step of "monitoring, in real time, a use record of the vehicle during an authorisation period", the vehicle authorisation management method further comprises: enabling the vehicle to send out an alarm and/or use prohibition information when an unauthorised function in the vehicle is used.

The invention further provides a vehicle authorisation management system, wherein the vehicle authorisation management system comprises an authorising terminal, a server and an authorised terminal; the authorising terminal is configured to send request information of a vehicle to the server; the server executes a corresponding authorisation mode according to the request information and sends authorisation information to the authorised terminal; and the authorised terminal is configured to unlock an operation permission on the vehicle that is corresponding to the authorisation information, wherein the authorisation modes comprise a service authorisation mode and an active authorisation mode.

In a preferred implementation of the above-mentioned vehicle authorisation management system, the request information comprises a service request and an authorisation request; the server executes the service authorisation mode if the authorising terminal sends the service request to the server; and the server executes the active authorisation mode if the authorising terminal sends the authorisation request to the server.

In a preferred implementation of the above-mentioned vehicle authorisation management system, the service authorisation mode is: matching, by the server, a service person for the vehicle according to the service request and sending an operation permission of the service person on the vehicle to an authorised terminal corresponding to the service person; and unlocking, by the service person, the operation permission on the vehicle through the authorised terminal.

In a preferred implementation of the above-mentioned vehicle authorisation management system, the service request comprises one or more of valet maintenance, valet battery charging and swap, and express delivery to the vehicle.

In a preferred implementation of the above-mentioned vehicle authorisation management system, the operation permission on the vehicle comprises one or more of unlocking/locking a vehicle door and a trunk, starting the vehicle, controlling and setting vehicle auxiliary functions, setting in-vehicle applications, performing remote control, and setting a system.

In a preferred implementation of the above-mentioned vehicle authorisation management system, the vehicle authorisation management system further comprises an authorisation timing module, the authorisation timing module is configured to monitor an authorised time of the vehicle, and only within the authorised time, the service person is allowed to perform operations within the permission on the vehicle.

In a preferred implementation of the above-mentioned vehicle authorisation management system, the active authorisation mode is: generating, by the server, an NFC key according to the authorisation request and sending the NFC key to the authorised terminal; and unlocking, by a holder of the authorised terminal through the NFC key, an operation permission of the vehicle that is corresponding to the authorisation request.

In a preferred implementation of the above-mentioned vehicle authorisation management system, the authorisation request comprises one or more of identify identification of an authorised person, a travelling range and an authorised use time of the vehicle, and usable functions of the vehicle.

In a preferred implementation of the above-mentioned vehicle authorisation management system, the vehicle authorisation management system further comprises an authorisation monitoring module and an authorisation storage module, wherein the authorisation monitoring module is configured to monitor, in real time, a use record of the vehicle during an authorisation period, and the authorisation storage module is configured to store the use record.

In a preferred implementation of the above-mentioned vehicle authorisation management system, the vehicle authorisation management system further comprises an alarm module; the alarm module can receive the use record of the vehicle during the authorisation period that is monitored by the authorisation monitoring module, and the alarm module sends out an alarm and/or use prohibition information when an unauthorised function in the vehicle is used.

In technical solutions of the invention, a corresponding authorisation mode is executed according to request information of a vehicle, that is, by means of a service authorisation mode or an active authorisation mode, a use right of the vehicle can be flexibly and conveniently assigned and managed, and there is no need to transfer the use right of the vehicle by handing over a key, thereby improving vehicle use experience of a vehicle owner. In one specific implementation, by means of an authorisation management method of the invention, a vehicle owner can not only conveniently lend the vehicle to others for using or authorise a service person, but also monitor, in real time, a use state of the vehicle during an authorisation period of the vehicle, and a use record of the vehicle during the authorisation period is stored, so that the vehicle owner can view vehicle use situations of the vehicle such as a travelling mileage during the authorisation period, thereby effectively managing the authorised use behaviour of the vehicle owner's vehicle.

### Brief Description of the Drawings

FIG. 1 is a basic flowchart of a vehicle authorisation management method of the invention;
FIG. 2 is a detailed flowchart of the vehicle authorisation management method of the invention; and
FIG. 3 is a schematic structural diagram of a vehicle authorisation management system of the invention.

### Detailed Description of Embodiments

In order to make the objectives, technical solutions and advantages of embodiments of the invention more obvious, the technical solutions of the invention will be clearly and completely described below in conjunction with the accompanying drawings. Obviously, the described embodiments are some, rather than all of the embodiments of the invention. It should be understood by those skilled in the art that these implementations are only used for explaining technical principles of the invention and are not intended to limit the scope of protection of the invention.

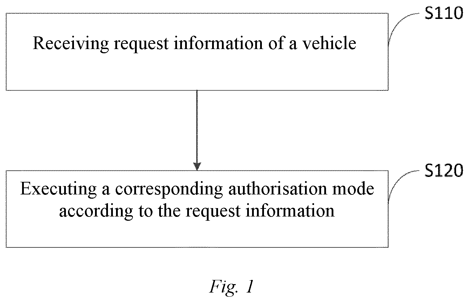

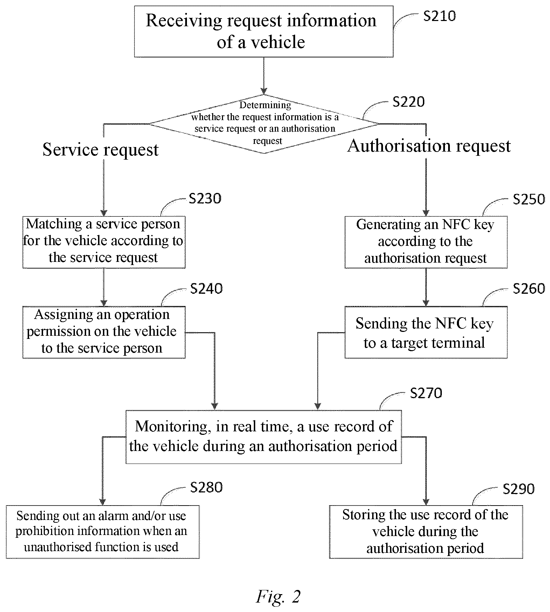

Firstly, referring to FIG. 1, FIG. 1 is a basic flowchart of a vehicle authorisation management method of the invention. As shown in FIG. 1, the vehicle authorisation management method of the invention comprises the steps of: S 110, receiving request information of a vehicle; and S120, executing a corresponding authorisation mode according to the request information, wherein the authorisation modes comprise a service authorisation mode and an active authorisation mode. Specifically, in the invention, the corresponding authorisation mode is executed according to the request information of the vehicle, that is, by means of the service authorisation mode or the active authorisation mode, a use right of the vehicle can be flexibly and conveniently assigned and managed, and there is no need to transfer the use right of the vehicle by handing over a key, thereby improving vehicle use experience of a vehicle owner. A specific implementation of the vehicle authorisation management method of the invention is described in detail below in conjunction with FIG. 2.

FIG. 2 is a detailed flowchart of the vehicle authorisation management method of the invention. As shown in FIG. 2, in this embodiment, step S210 of receiving request information of a vehicle is firstly performed. As an example, the request information of the vehicle may be sent to a server by a vehicle owner (that may be understood as a user with ownership of the vehicle or a full use right of the vehicle) through terminals (comprising mobile terminals such as a mobile phone or a tablet computer, and also comprising fixed terminals such as a computer, a service device or an onboard terminal); and the vehicle owner may also directly send the request information of the vehicle to the server through a vehicle computer system. In other words, the vehicle owner may send the corresponding request information to the server in any realizable way according to his/her own actual demand.

Then the method proceeds to step S220 of determining whether the request information is a service request or an authorisation request. A service authorisation mode is executed if the request information is a service request, and in this case, the method proceeds to step S230 of matching a service person for the vehicle according to the service request. The service request may be services such as valet maintenance, valet battery charging, valet battery swap, and express delivery to the vehicle. Taking the valet battery swap as an example, when a vehicle owner needs a "valet battery swap" service (that is, a service person performs a battery swap service on the vehicle of the vehicle owner), a "valet battery swap" service request may be sent to a server through an authorising terminal, and after receiving the "valet battery swap" request, the server assigns a corresponding service person to execute the service.

After the appropriate service person is matched, step S240 of assigning an operation permission on the vehicle to the service person is performed (for a specific assignment method, reference can be made to the following description). The operation permission on the vehicle may be unlocking/locking a vehicle door and a trunk, starting the vehicle (allowing the service person to start the vehicle), starting a battery charging and swap mode (allowing the service person to perform battery charging and swap operations on the vehicle), controlling and setting vehicle auxiliary functions (for example, allowing the service person to perform lamplight setting, drive auxiliary setting, vehicle lock setting, windscreen wiper, rearview mirror and air-conditioner related setting, driveability setting and the like through a central control screen), setting in-vehicle applications (for example, allowing the service person to set navigation, phone call, weather, music, a travel plan, 360-degree surround view, vehicle self-checking, video and the like), performing remote control (for example, allowing remote starting of an air-conditioner, remote unlocking, remote starting, remote vehicle searching and the like), setting a system (for example, allowing network setting, time setting, sound setting and the like), and other setting and operations (for example, account and security, factory reset, FOTA upgrade, intelligent device interconnection and the like). The example in which the service request is the "valet battery swap" service is still used as an example, and in this case, the operation permission assigned to the service person may be to allow the service person to start the vehicle and perform battery charging and swap operations on the vehicle.

As an example, in step S240, the operation permission on the vehicle further comprises an authorised time, and only within the authorised time, the service person can perform operations within the permission on the vehicle. In other words, a service time of the service person is limited while the operation permission is assigned to the service person, and the service person does not have the permission to operate the vehicle after the limited service time is exceeded.

In step S220, an active authorisation mode is executed if the request information is an authorisation request, and in this case, the method proceeds to step S250 of generating an NFC key according to the authorisation request. The authorisation request comprises identity identification of an authorised person, a travelling range and an authorised use time of the vehicle, usable functions of the vehicle (for example, whether to allow the authorised person to use an ultimate performance mode, whether to allow the authorised person to use applications such as an encrypted safety box, music, and video) and the like. In one implementation, the server may generate, through a symmetric or asymmetric encryption algorithm, the NFC key after receiving the authorisation request. Then step S260 of sending the NFC key to a target terminal is performed. Specifically, the NFC key generated in step S250 is sent to the target terminal, the target terminal may be a mobile phone/tablet terminal of the authorised person, and the authorised person unlocks a corresponding operation permission (that is, an operation permission within a range authorised by the vehicle owner) of the vehicle through the NFC key in the mobile phone/tablet terminal.

It should be noted that in the service authorisation mode, the server assigns the operation permission on the vehicle to the service person according to the service request of the vehicle owner, while in the active authorisation mode, the vehicle owner actively authorise others to use the vehicle, that is, in the active authorisation mode, the operation permission on the vehicle may be customised by the vehicle owner, for example, the authorised person may be authorised to drive the vehicle within a specified range, in order to ensure travelling safety, the authorised person is prohibited from using the ultimate performance mode (such as 0 to 100 km/h acceleration), in order to protect property safety of the vehicle owner, the authorised person is prohibited from using the encrypted safety box in the vehicle, and in order to protect privacy of the vehicle owner, the authorised person is prohibited from viewing the position of the vehicle through a mobile phone.

Continuously referring to FIG. 2, the vehicle authorisation management method of the invention further comprises step S270 of monitoring, in real time, a use record of the vehicle during an authorisation period. When the authorised person uses an unauthorised function, step S280 of sending out an alarm and/or use prohibition information is executed. For example, when the authorised person drives the vehicle out of the authorised use range (a geo-fence set by the vehicle owner) of the vehicle, both the authorised person and the vehicle owner receive a notification for reminding. In addition, during a vehicle authorisation period, the vehicle owner may also actively stop authorisation, for example, in a process of driving the vehicle by the authorised person, if the vehicle owner stops authorisation for vehicle start, the authorised person is unable to start the vehicle for next drive behaviour.

As an example, the use record of the vehicle during an authorisation period may be realised by an authorisation monitoring module provided in the vehicle, the authorisation monitoring module acquires an operation permission on the vehicle after the vehicle is unlocked (for example, the vehicle is unlocked by using the NFC key), and once an unauthorised part is used, an alarm and use prohibition information may be directly sent out so as to prevent the vehicle from performing an operation beyond the permission.

The authorisation management method of the invention further comprises step S290 of storing the use record of the vehicle during the authorisation period. During the whole authorisation period of the vehicle, the vehicle owner can not only view, in real time, a position of the vehicle, but also view, in an authorisation history, a travelling mileage and the like of the vehicle driven by the authorised person during the authorisation period.

As described above, in the vehicle authorisation management method of the invention, by means of a service authorisation mode or an active authorisation mode, a use right of a vehicle is flexibly and conveniently assigned and managed, a vehicle owner can not only conveniently lend the vehicle to others for using or authorise a service person, but also monitor, in real time, a use state of the vehicle during an authorisation period of the vehicle, and a use record of the vehicle during the authorisation period is stored, so that the vehicle owner can view vehicle use situations of the vehicle such as a travelling mileage during the authorisation period, thereby effectively managing the authorised use behaviour of the vehicle owner's vehicle.

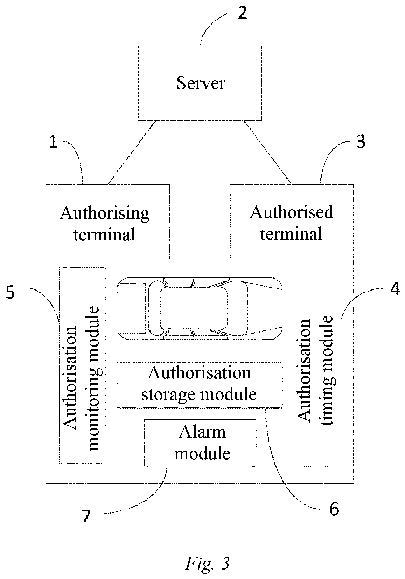

The invention further provides a vehicle authorisation management system. Referring to FIG. 3, FIG. 3 is a schematic structural diagram of the vehicle authorisation management system of the invention. As shown in FIG. 3, the vehicle authorisation management system of the invention comprises an authorising terminal 1, a server 2 and an authorised terminal 3. The authorising terminal 1 is configured to send request information of a vehicle to the server 2; the server 2 executes a corresponding authorisation mode according to the request information and sends authorisation information to the authorised terminal 3; and the authorised terminal 3 is configured to unlock an operation permission on the vehicle that is corresponding to the authorisation information. The authorisation modes comprise a service authorisation mode and an active authorisation mode. For the service authorisation mode and the active authorisation mode and the specific implementations thereof, reference can be made to the above descriptions, which are not repeatedly described herein.

Continuously referring to FIG. 3, in one specific implementation, the vehicle authorisation management system of the invention further comprises an authorisation timing module 4, an authorisation monitoring module 5, an authorisation storage module 6 and an alarm module 7. The authorisation timing module 4 is configured to monitor an authorised time of the vehicle, and only within the authorised time, the service person is allowed to perform operations within the permission on the vehicle. The authorisation monitoring module 5 is configured to monitor, in real time, a use record of the vehicle during an authorisation period. The authorisation storage module 6 is configured to store the use record of the vehicle during the authorisation period. The alarm module 7 can receive the use record of the vehicle during the authorisation period that is monitored by the authorisation monitoring module 5, and the alarm module 7 sends out an alarm and/or use prohibition information when an unauthorised function in the vehicle is used. In the vehicle authorisation management system mentioned above, for specific implementations of various modules, reference can be made to the above descriptions, which are not repeatedly described herein. By means of a vehicle authorisation management system of the invention, a vehicle owner can not only conveniently lend the vehicle to others for using or authorise a service person, but also monitor, in real time, a use state of the vehicle during an authorisation period of the vehicle, and a use record of the vehicle during the authorisation period is stored, so that the vehicle owner can view vehicle use situations of the vehicle such as a travelling mileage during the authorisation period, thereby effectively managing the authorised use behaviour of the vehicle owner's vehicle.

As an example, the authorisation timing module 4, the authorisation monitoring module 5, the authorisation storage module 6 and the alarm module 7 may be separately integrated into a central control system of the vehicle, or may be flexibly set in the vehicle separately as independent modules. In addition, the authorisation timing module 4, the authorisation monitoring module 5, the authorisation storage module 6 and the alarm module 7 may be integrated into the authorising terminal of the vehicle, and serve as a part of the authorising terminal of the vehicle; or these modules may be independently integrated as an "authorisation management module" which is configured to monitor, in real time, the use record of the vehicle during the authorisation period and send out warning information and the like.

Heretofore, the technical solutions of the invention have been described in conjunction with the preferred implementations shown in the accompanying drawings; however, it should be readily understood by those skilled in the art that the scope of protection of the invention is obviously not limited to these specific implementations. Without departing from the principles of the invention, those skilled in the art may make equivalent changes or substitutions to related technical features, and technical solutions obtained after these changes or substitutions will fall within the scope of protection of the invention.

## Claims

1. A vehicle authorisation management method, **characterized by** comprising the steps of:
receiving request information of a vehicle; and
executing a corresponding authorisation mode according to the request information;
wherein the authorisation modes comprise a service authorisation mode and an active authorisation mode.

2. The vehicle authorisation management method according to claim 1, **characterized in that** the step of "executing a corresponding authorisation mode according to the request information" specifically comprises:
executing the service authorisation mode if the request information is a service request; and
executing the active authorisation mode if the request information is an authorisation request.

3. The vehicle authorisation management method according to claim 2, **characterized in that** the service authorisation mode comprises:
matching a service person for the vehicle according to the service request; and
assigning an operation permission on the vehicle to the service person.

4. The vehicle authorisation management method according to claim 3, **characterized in that** the service request comprises one or more of valet maintenance, valet battery charging and swap, and express delivery to the vehicle.

5. The vehicle authorisation management method according to claim 3, **characterized in that** the operation permission on the vehicle comprises one or more of unlocking/locking a vehicle door and a trunk, starting the vehicle, starting a battery charging and swap mode, controlling and setting vehicle auxiliary functions, setting in-vehicle applications, performing remote control, and setting a system.

6. The vehicle authorisation management method according to claim 5, **characterized in that** the operation permission on the vehicle further comprises an authorised time, and
only within the authorised time, the service person can perform operations within the permission on the vehicle.

7. The vehicle authorisation management method according to claim 2, **characterized in that** the active authorisation mode comprises:
generating an NFC key according to the authorisation request; and
sending the NFC key to a target terminal;
wherein the NFC key is configured to unlock an operation permission on the vehicle that is corresponding to the authorisation request.

8. The vehicle authorisation management method according to claim 7, **characterized in that** the authorisation request comprises one or more of identity identification of an authorised person, a travelling range and an authorised use time of the vehicle, and usable functions of the vehicle.

9. The vehicle authorisation management method according to any of claims 1 to 8, **characterized in that** the vehicle authorisation management method further comprises:
monitoring, in real time, a use record of the vehicle during an authorisation period; and
storing the use record.

10. The vehicle authorisation management method according to claim 9, **characterized in that** after the step of "monitoring, in real time, a use record of the vehicle during an authorisation period", the vehicle authorisation management method further comprises:
enabling the vehicle to send out an alarm and/or use prohibition information when an unauthorised function in the vehicle is used.

11. A vehicle authorisation management system, **characterized by** comprising an authorising terminal, a server and an authorised terminal, wherein
the authorising terminal is configured to send request information of a vehicle to the server;
the server executes a corresponding authorisation mode according to the request information and sends authorisation information to the authorised terminal; and
the authorised terminal is configured to unlock an operation permission on the vehicle that is corresponding to the authorisation information;
wherein the authorisation modes comprise a service authorisation mode and an active authorisation mode.

12. The vehicle authorisation management system according to claim 11, **characterized in that** the request information comprises a service request and an authorisation request, and
the server executes the service authorisation mode if the authorising terminal sends the service request to the server; and
the server executes the active authorisation mode if the authorising terminal sends the authorisation request to the server.

13. The vehicle authorisation management system according to claim 12, **characterized in that** the service authorisation mode is:
matching, by the server, a service person for the vehicle according to the service request, and sending an operation permission of the service person on the vehicle to an authorised terminal corresponding to the service person; and
unlocking, by the service person, the operation permission on the vehicle through the authorised terminal.

14. The vehicle authorisation management system according to claim 13, **characterized in that** the service request comprises one or more of valet maintenance, valet battery charging and swap, and express delivery to the vehicle.

15. The vehicle authorisation management system according to claim 13, **characterized in that** the operation permission on the vehicle comprises one or more of unlocking/locking a vehicle door and a trunk, starting the vehicle, controlling and setting vehicle auxiliary functions, setting in-vehicle applications, performing remote control, and setting a system.

16. The vehicle authorisation management system according to claim 15, **characterized in that** the vehicle authorisation management system further comprises an authorisation timing module, and
the authorisation timing module is configured to monitor an authorised time of the vehicle, and only within the authorised time, the service person is allowed to perform operations within the permission on the vehicle.

17. The vehicle authorisation management system according to claim 12, **characterized in that** the active authorisation mode is:
generating, by the server, an NFC key according to the authorisation request and sending the NFC key to the authorised terminal; and
unlocking, by a holder of the authorised terminal through the NFC key, an operation permission of the vehicle that is corresponding to the authorisation request.

18. The vehicle authorisation management system according to claim 17, **characterized in that** the authorisation request comprises one or more of identity identification of an authorised person, a travelling range and an authorised use time of the vehicle, and usable functions of the vehicle.

19. The vehicle authorisation management system according to any of claims 11 to 17, **characterized in that** the vehicle authorisation management system further comprises an authorisation monitoring module and an authorisation storage module, wherein
the authorisation monitoring module is configured to monitor, in real time, a use record of the vehicle during an authorisation period; and
the authorisation storage module is configured to store the use record.

20. The vehicle authorisation management system according to claim 19, **characterized in that** the vehicle authorisation management system further comprises an alarm module;
the alarm module can receive the use record of the vehicle during the authorisation period that is monitored by the authorisation monitoring module, and
the alarm module sends out an alarm and/or use prohibition information when an unauthorised function in the vehicle is used.
